Europäisches Patentamt

European Patent Office

Office européen des brevets

(19)

(11) **EP 0 919 445 A1**

(12) **DEMANDE DE BREVET EUROPEEN**

(43) Date de publication:
02.06.1999 Bulletin 1999/22

(51) Int Cl.⁶: **B60T 8/00**

(21) Numéro de dépôt: 98402886.0

(22) Date de dépôt: 20.11.1998

(84) Etats contractants désignés:
AT BE CH CY DE DK ES FI FR GB GR IE IT LI LU MC NL PT SE
Etats d'extension désignés:
AL LT LV MK RO SI

(30) Priorité: 25.11.1997 FR 9714800

(71) Demandeur: **Renault V.I.**
69003 Lyon (FR)

(72) Inventeurs:
• **Couvignou, Philippe**
92100 Boulogne Billancourt (FR)

• **Fournoy, Jean-Marc**
92500 Rueil Malmaison (FR)
• **Lacassagne, Laurent**
78460 Chevreuse (FR)

(74) Mandataire: **Fernandez, Francis Lionel**
**Renault,**
**Technocentre,**
**S.0267 - TCR AVA 0-56,**
**1, avenue du Golf**
**78288 Guyancourt (FR)**

(54) **Procédé et système de stabilisation d'un véhicule par freinage**

(57)    L'invention concerne un procédé et un système pour améliorer la stabilité verticale et horizontale des véhicules routiers, articulés ou non.

L'invention réside principalement dans le fait que le risque de renversement est détecté en surveillant les vitesses mesurées des roues arrières du véhicule ainsi que l'accélération latérale mesurée ou estimée que subit le véhicule. Lorsqu'un lever de roue est détecté, une action de réduction du couple moteur et de freinage individualisé par roue est entreprise de manière à ralentir le véhicule et par conséquent à réduire l'accélération latérale qu'il subit.

L'invention propose également un moyen de corriger les mouvements horizontaux et anormaux du tracteur et de sa remorque éventuelle en réduisant le couple moteur et en appliquant des actions de freinage individualisé par roue.

L'invention est applicable aux véhicules industriels et de tourisme, tractant éventuellement une remorque ou une semi-remorque.

FIG.3

EP 0 919 445 A1

## Description

L'invention concerne les systèmes pour contrôler le comportement dynamique d'un véhicule et, plus particulièrement, un procédé et un système pour stabiliser un véhicule tel qu'un camion ou un véhicule articulé tel qu'un convoi tracteur/semi-remorque ou automobile/caravane en freinant certaines roues du véhicule et en réduisant le couple moteur selon le type d'instabilité qui a été détecté.

Il existe de nombreux systèmes pour contrôler le comportement dynamique d'un véhicule et les plus connus sont le système anti-blocage des roues freinées ou système ABS et le système anti-patinage des roues motrices ou système ASR. D'autres systèmes mettent en oeuvre un procédé et un dispositif de freinage asymétrique des roues d'une automobile de manière à corriger le comportement horizontal ce qui permet au conducteur de contrôler la trajectoire de son véhicule. De tels systèmes équipent certains véhicules automobiles de tourisme commercialisés à l'heure actuelle. Cependant, ces systèmes de stabilisation horizontale ne sont pas adaptés aux véhicules poids lourds qui possèdent un comportement routier particulier dû au fait, en premier lieu, que la masse de leur chargement varie dans de très grandes proportions, en second lieu, que leur centre de gravité est bien plus élevé et qu'ils peuvent se renverser facilement, et enfin, que la présence d'une remorque ou d'une semi-remorque attelée au véhicule poids lourd pose de nouveaux problèmes de stabilité horizontale et verticale.

Un but de la présente invention est donc de mettre en oeuvre un procédé et de réaliser un système de stabilisation verticale d'un véhicule par ralentissement contrôlé en utilisant le système de freinage et le couple moteur pour permettre la suppression des causes d'instabilité verticale. Par ailleurs, les systèmes de stabilisation connus pour les véhicules légers ne prennent pas en compte le comportement particulier des véhicules articulés consistant parfois en des mouvements anormaux de la remorque vis-à-vis du véhicule tracteur, comme par exemple la mise en portefeuille qui est un repliement du convoi sur lui-même, ou comme par exemple le fouettement de la remorque vers l'extérieur d'un virage.

Un autre but de la présente invention est de mettre en oeuvre un procédé et réaliser un système de stabilisation horizontale d'un véhicule articulé qui permettent de détecter de tels mouvements et d'agir sur le freinage des roues et la réduction du couple moteur pour permettre de limiter l'amplitude de tels mouvements et les supprimer.

L'invention concerne un procédé de stabilisation d'un véhicule poids lourd, articulé ou non, par réduction du couple moteur et par freinage asymétrique dans un système de freinage global comprenant au moins un dispositif anti-blocage des roues, des capteurs pour mesurer la vitesse linéaire longitudinale V du véhicule, l'angle de braquage $\delta$ du volant, la vitesse de lacet $\Phi'_t$ du véhicule tracteur, des moyens de calcul et un dispositif de freinage à commande électrique ou électronique pour fournir des forces de freinage à appliquer à chaque roue, caractérisé par les étapes suivantes consistant à :

(a) mesurer ou estimer l'accélération latérale $a_y$ subie par le véhicule, puis comparer cette accélération latérale à une valeur maximale $a_{ymax}$ que peut supporter le véhicule avant risque de renversement ;
(b) détecter le lever de roue de la (ou des) roue(s) arrière(s) intérieure(s) au virage lorsque l'accélération latérale dépasse la valeur maximale $a_{ymax}$, et
(c) réduire le couple moteur et freiner les roues du véhicule avec une intensité particulière à chaque roue de sorte que le véhicule réduit sa vitesse, ce qui diminue l'accélération latérale $a_y$.

Un tel procédé permet d'éviter un renversement quels que soient la situation de conduite (virage, dépassement, dévers, etc) et le type de véhicule poids lourds, articulé ou non.

La détection du lever de roue est réalisée soit lorsque la différence des vitesses des roues arrière est supérieure à un certain seuil, soit lorsque la différence des glissements longitudinaux des roues arrière est supérieure à un certain seuil.

Le procédé de l'invention est également prévu pour réduire le couple moteur et freiner le véhicule lorsque la vitesse de lacet $\Phi'_t$ s'écarte trop d'une certaine valeur de référence $\Phi'_{t,r}$ correspondant à un comportement normal du véhicule. A cet effet, les étapes du procédé sont complétées par les étapes suivantes consistant à :

(d) calculer la vitesse de lacet réelle $\Phi'_t$ du véhicule,
(e) calculer une vitesse de lacet de référence $\Phi'_{t,r}$ correspondant à un comportement normal de référence du véhicule,
(f) calculer une valeur d'écart de vitesses de lacet entre les vitesses de lacet de référence et réelle $(\Phi'_{t,r} - \Phi'_t)$, et
(g) calculer des pressions différentielles de freinage à appliquer aux roues d'un même essieu en fonction de la valeur d'écart $(\Phi'_{t,r} - \Phi'_t)$ pour créer un couple de lacet tendant à diminuer la valeur d'écart $(\Phi'_{t,r} - \Phi'_t)$.

Afin de ne pas freiner, de manière insignifiante ou trop fortement, les étapes du procédé sont complétées par les étapes suivantes consistant à :

(h) comparer les pressions différentielles de freinage calculées par l'étape (g) à un premier seuil et à ne tenir compte que des pressions différentielles qui sont supérieures à ce premier seuil, et

(I) comparer les pressions différentielles de freinage retenues par l'étape (h) à un deuxième seuil et contraindre les pressions différentielles à rester inférieures à ce deuxième seuil.

Afin d'éviter une mise en portefeuille ou un fouettement d'un véhicule articulé, les étapes du procédé sont complétées par les étapes suivantes :

(j) mesurer l'angle d'articulation $\Phi_{ts}$ entre le tracteur et la remorque,

(k) calculer un angle d'articulation de référence $\Phi_{ts,r}$ au-delà duquel il y a risque de mise en portefeuille ou de fouettement,

(l) calculer la valeur d'écart $(\Phi_{t,s} - \Phi_{ts,r})$,

(m) comparer cette valeur d'écart $(\Phi_{ts} - \Phi_{ts,r})$ à un seuil pour fournir une indication lorsqu'elle est supérieure audit seuil,

(n) calculer la dérivée par rapport au temps de cette valeur d'écart $(\Phi_{ts} - \Phi_{ts,r})$ pour déterminer par son signe si la valeur de l'erreur augmente, et

(o) freiner les roues de la remorque si les conditions des étapes (m) et (n) sont remplies, ce qui indique un début de mise en portefeuille ou de fouettement. Cette action de freinage a pour effet de réaligner la remorque par rapport au véhicule tracteur.

Dans le cas où l'angle d'articulation $(\Phi_{ts})$ entre le tracteur et la remorque n'est pas connu, les étapes (j) à (o) sont remplacées par les étapes suivantes consistant à :

(j') détecter un sur-virage significatif du tracteur dont l'amplitude ne diminue pas assez vite ou augmente, et

(k') freiner les roues de la remorque si les conditions de l'étape (j') sont remplies.

L'invention concerne également un système de stabilisation d'un véhicule poids lourd, articulé ou non, par freinage asymétrique dans un système de freinage global comprenant au-moins :

- un dispositif anti-blocage des roues,
- des capteurs pour mesurer la vitesse linéaire longitudinale V du véhicule, l'angle de braquage $\delta$ du volant, la vitesse de lacet du tracteur $\Phi'_t$,
- un dispositif de freinage à commande électrique ou électronique pour fournir des valeurs calculées de force de freinage à appliquer sur chaque roue de chaque essieu,

caractérisé en ce qu'il comprend :

- des premiers moyens pour calculer, à l'aide d'un modèle mathématique de référence, une valeur de référence de vitesse de lacet du tracteur $\Phi'_{t,r}$ correspondant à un comportement normal du véhicule, et
- des deuxièmes moyens pour calculer des forces différentielles de freinage à appliquer aux roues de chaque essieu en fonction de la valeur d'écart $(\Phi'_{t,r} - \Phi'_t)$ entre la valeur de référence $\Phi'_{t,r}$ et la vitesse de lacet $\Phi'_t$, lesdites forces différentielles étant appliquées au dispositif anti-blocage.

Dans le cas où le véhicule est articulé,

- le dispositif de freinage est prévu pour fournir des valeurs calculées de force de freinage à appliquer sur chaque essieu de la remorque,
- les deuxièmes moyens de calcul sont prévus pour calculer en outre des forces de freinage à appliquer aux essieux de la remorque en fonction de la valeur d'écart $(\Phi_{t,r} - \Phi'_t)$ et de la dérivée de cette valeur d'écart, lesdites forces sont appliquées au dispositif de freinage de la remorque.

Dans le cas où le véhicule est articulé et que la remorque est équipée de capteurs et que les informations en provenance de ces capteurs sont appliquées au système selon l'invention,

- des capteurs de vitesse des roues à droite et à gauche de l'un ou plusieurs des essieu(x) de la remorque, ou bien un capteur d'accélération latérale de la remorque, ou bien un capteur de vitesse de lacet de la remorque $\Phi'_s$, ou bien un capteur d'angle d'articulation $\Phi_{ts}$, ou bien une combinaison quelconque comprenant un ou plusieurs de ces capteurs,

- les premiers moyens sont prévus pour calculer en outre une valeur de référence d'angle d'articulation $\Phi_{ts,r}$ correspondant à un comportement normal du véhicule, le système comportant, en outre :
- des troisièmes moyens pour calculer les valeurs du freinage des roues de la remorque lorsque la valeur d'écart $(\Phi_{ts,r} - \Phi_{ts})$ entre la valeur de référence de l'angle d'articulation $\Phi_{ts,r}$ et la valeur mesurée de l'angle d'articulation $\Phi_{ts}$, les valeurs de freinage étant appliquées au dispositif de freinage de la remorque.

D'autres caractéristiques et avantages de la présente invention apparaîtront à la lecture de la description suivante d'un exemple particulier de réalisation, ladite description étant faite en relation avec les dessins joints dans lesquels :

- les figures 1a et 1b sont des schémas qui permettent de définir différents paramètres relatifs au comportement dynamique d'un véhicule,
- la figure 2 est un schéma fonctionnel d'un système de freinage de véhicule incorporant un système de stabilisation selon l'invention,
- la figure 3 est un schéma fonctionnel d'un dispositif de commande des pressions de freinage selon l'invention,
- la figure 4 est un schéma fonctionnel d'un dispositif qui permet de déterminer les pressions de freinage des roues du tracteur, et
- la figure 5 est un schéma fonctionnel d'un dispositif qui permet de déterminer les pressions de freinage des roues de la semi-remorque.

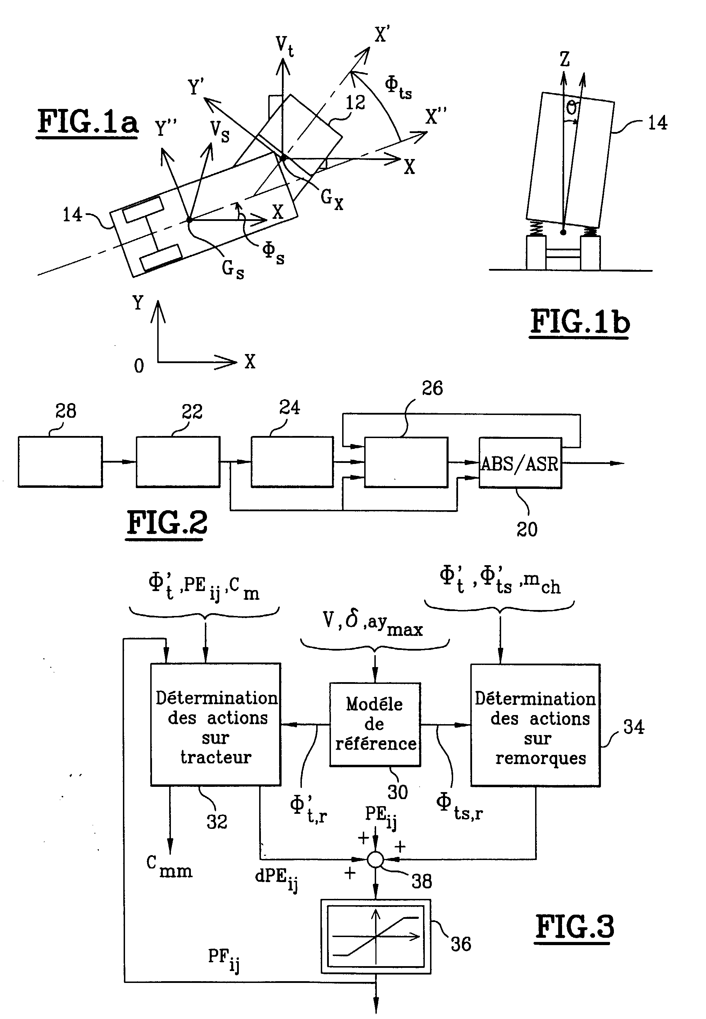

La figure 1a représente, en vue de dessus, un véhicule articulé 10, tel qu'un tracteur avec semi-remorque, comprenant un tracteur 12 auquel est accrochée une semi-remorque 14 et la figure 1b représente, en vue de derrière, la semi-remorque 14.

Le repère OXYZ est un repère fixe lié à la route ; $G_tX'Y'Z$ est un repère lié au véhicule tracteur 12 en son centre de gravité $G_t$ ; $G_sX''Y''Z$ est un repère lié à la semi-remorque 14 en son centre de gravité $G_s$. Dans les notations, l'indice "t" désigne le véhicule tracteur 12 et l'indice "s" désigne la semi-remorque.

- $\Phi$, exprimé en radian, est l'angle de lacet, c'est-à-dire l'angle que fait l'axe longitudinal du tracteur $G_tX'$ ou de la semi-remorque $G_sX''$ avec l'axe OX de la route ($\Phi_t$ ou $\Phi_s$) ;
- $\Theta$, exprimé en radian, est l'angle de roulis, c'est-à-dire l'angle que forme l'axe vertical du véhicule avec la verticale OZ ; dans le cas d'une liaison du type pivot/sellette et pour de faibles angles d'articulation, on a $\Theta_t = \Theta_s$ ;
- $\delta$, exprimé en radian, est l'angle de braquage des roues avant du tracteur ;
- V est la vitesse linéaire longitudinale du véhicule exprimée en m/s ($V_t$ ou $V_s$) ;
- $\Phi_{t,s}$, exprimé en radian, est l'angle d'articulation entre la semi-remorque et le tracteur et on a la relation : $\Phi_{ts} = \Phi_t - \Phi_s$ ;
- $a_y$, exprimé en $m/s^2$, est l'accélération latérale mesurée au centre de gravité du véhicule, tracteur ou semi-remorque.

$\Phi'$ est la vitesse de lacet du tracteur ($\Phi'_t$) ou de la semi-remorque ($\Phi'_s$), c'est-à-dire la dérivée des angles de lacet $\Phi_t$ et $\Phi_s$.

La formule approximative qui donne l'accélération latérale maximale $a_{ymax}$ juste avant le renversement est :

$$a_{ymax} = g(e/2h),$$

formule dans laquelle :

- g est l'accélération de la pesanteur ($9,81 m/s^2$),
- e est la voie entre les essieux (2 m environ),
- h est la hauteur du centre de gravité du véhicule.

Cette formule montre que $a_{ymax}$ est d'environ 2g pour une automobile et varie entre 0,4g et 1g pour un véhicule poids lourd.

Par ailleurs, les pneumatiques des véhicules n'assurent une tenue latérale correcte sans glissade que si $a_y < \mu.g$, formule dans laquelle $\mu$ est le coefficient d'adhérence de la route, sachant que $\mu$ est compris entre 0,8 et 1,1 pour une route sèche, entre 0,3 et 0,8 pour une route mouillée et entre 0 et 0,3 pour une route sous la neige ou verglas.

Ainsi, quand $a_y > \mu.g$, les efforts de guidage générés par les pneumatiques sont saturés et le véhicule part en dérapage plus ou moins contrôlé.

Par conséquent, sur route sèche et sous forte excitation latérale, virage serré par exemple, les automobiles partent en dérapage latéral sans se renverser tandis que les poids lourds risquent fortement de se renverser dès que $a_y = 0{,}8g$ pour les chargements avec un centre de gravité bas (h = 1,2m), et ceci avant que le dérapage latéral ne se manifeste. Sur route à faible adhérence, la situation est la même pour les automobiles mais le seuil d'accélération latérale maximum avant la glissade est diminué en proportion du coefficient d'adhérence. Pour les poids lourds roulant sur une route à faible adhérence, ce sont les paramètres hauteur h du centre de gravité et coefficient d'adhérence de la route μ qui vont déterminer le comportement limite, glissade ou renversement, qui apparaîtra en premier à partir d'un certain niveau d'accélération latérale.

L'analyse succincte du comportement des véhicules montrent qu'il y a intérêt à connaître le coefficient d'adhérence de la route μ, à mesurer ou à estimer l'accélération latérale $a_y$ du véhicule poids lourd et à connaître les caractéristiques de son centre de gravité, notamment sa hauteur h, pour déterminer la valeur $a_{ymax}$.

En l'absence de capteur, la formule $a_y = V.\Phi'$ permet d'estimer une valeur approximative de l'accélération latérale subie par un véhicule.

Le système de stabilisation d'un véhicule poids lourd selon l'invention est intégré dans le système de freinage global du véhicule de manière à effectuer automatiquement les freinages ou à modifier les ordres de freinage du conducteur en fonction des paramètres mesurés par les capteurs particuliers au système de stabilisation ou calculés par ce dernier.

Ainsi, comme le montre le schéma fonctionnel de la figure 2, un système de freinage global comprend un dispositif 20 qui fournit les six pressions de freinage pour les six roues du tracteur/semi-remorque, ce dispositif 20 étant constitué, par exemple, par un dispositif ABS d'antiblocage et un dispositif ASR d'anti-patinage. Il est à noter que le dispositif ASR n'est pas nécessaire pour la mise en oeuvre de l'invention.

En l'absence du système de stabilisation selon l'invention, les signaux appliqués au dispositif 20 proviennent du conducteur par la pédale de frein et la pédale d'accélérateur ou de capteurs tels que ceux qui détectent la rotation des roues de chaque essieu par l'intermédiaire d'un dispositif de sélection et d'estimation 22 et d'un dispositif électro-pneumatique de freinage 24 dans le cas d'un poids lourd et d'un dispositif électro-hydraulique de freinage dans le cas d'une automobile.

De manière plus précise, le dispositif 22 reçoit les signaux de mesure correspondant aux commandes du conducteur et aux capteurs représentés par le dispositif 28. Il sélectionne les mesures qui présentent de l'intérêt et estime certains paramètres tels que la masse $m_{ch}$ du chargement et la hauteur h du centre de gravité et le coefficient d'adhérence μ de la route.

Le dispositif 24 réalise la répartition électronique entre les essieux de la pression de freinage demandée par le conducteur et fournit une valeur de consigne de pression de freinage $PE_{ij}$ pour chaque demi-essieu. Dans les notations, l'indice i indique le numéro de l'essieu en commençant avec i=1 pour l'essieu avant du tracteur puis en incrémentant i pour les essieux suivants du tracteur et de la remorque, et l'indice j indique le côté du véhicule avec j=1 pour le côté gauche et j=2 pour le côté droit. Les valeurs de pression $PE_{ij}$ fournies par le dispositif 24 sont égales à droite et à gauche, autrement dit $PE_{i1}=PE_{i2}=PE_i$ pour tout essieu i du convoi. En l'absence du dispositif de stabilisation selon l'invention, ce sont ces valeurs $PE_{ij}$ qui sont directement appliquées au dispositif 20, de manière à adapter ces pressions de freinage pour éviter le blocage des roues par l'intermédiaire du dispositif anti-blocage.

Pour mettre en oeuvre l'invention, les valeurs des pressions $PE_{ij}$ de freinage fournies par le dispositif 24 sont appliquées à un dispositif de contrôle 26 qui adapte les pressions de freinage sur chaque demi-essieu en fonction de la situation du véhicule définie par certains paramètres.

Le schéma fonctionnel du dispositif de contrôle 26 est donné par la figure 3. Les variables d'entrée comprennent les valeurs V, δ, $a_{ymax}$, $\Phi'_t$, $\Phi_{ts}$, définies précédemment ainsi que les valeurs de pression $PE_{ij}$ sur chaque demi-essieu et le couple moteur $c_m$.

Les valeurs V, δ et $a_{ymax}$, qui sont mesurées par des capteurs 28 pour V et δ et calculées pour $a_{ymax}$ sont appliquées à un modèle de référence 30 qui calcule $\Phi'_{t,r}$ et $\Phi_{ts,r}$ appelées valeurs de consigne.

La valeur de consigne $\Phi'_{t,r}$ est appliquée à un modèle de stratégie 32 auquel sont appliquées les valeurs $\Phi'_t$, $PE_{ij}$ et $C_m$ et qui fournit quatre valeurs différentielles de pression de freinage $dPE_{ij}$ et une valeur de consigne couple moteur modifiée $C_{mm}$. Ce sont ces cinq valeurs qui sont appliquées au dispositif anti-blocage des quatre roues du tracteur, soit directement pour la valeur de consigne de couple moteur, soit par l'intermédiaire d'un additionneur 38 recevant $PE_{ij}$ et d'un dispositif de saturation 36 pour les valeurs différentielles de pression $dPE_{ij}$. La valeur de consigne $\Phi_{ts,r}$ est appliquée à un modèle de stratégie de semi-remorque 34 auquel sont appliquées les valeurs $\Phi_t$, $\Phi_{ts}$ et $m_{ch}$ et qui fournit les deux valeurs de pression de freinage $PF_{ij}$ pour les essieux de la semi-remorque.

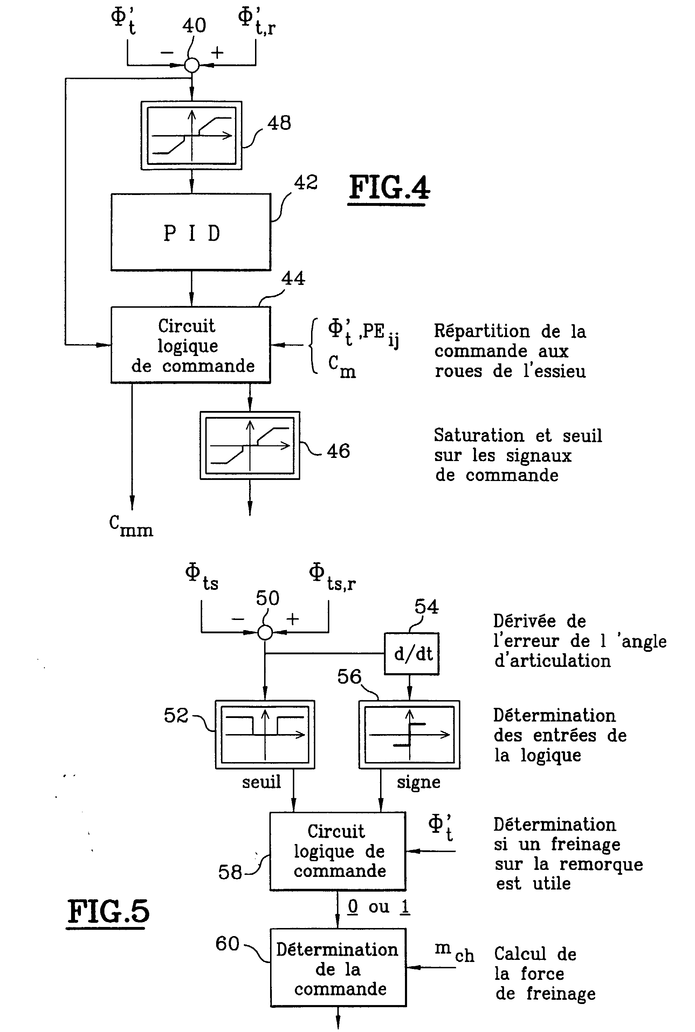

Le modèle de stratégie de tracteur 32 comprend (figure 4) un comparateur 40, un premier circuit de saturation et de seuil 48, un correcteur 42 de type Proportionnel-Intégral-Différentiel dit PID, un circuit logique de commande 44 et un deuxième circuit de saturation et de seuil 46.

Le comparateur 40 compare les valeurs $\Phi'_t$ et $\Phi'_{t,r}$ et fournit une valeur d'écart qui est appliquée au circuit logique de commande 44 et au correcteur 42.

Le correcteur 42 fournit une valeur de couple de lacet qui est appliquée au circuit logique de commande 44 auquel sont appliquées les valeurs $\Phi'_t$, $PE_{ij}$ et $C_m$.

Le circuit logique de commande fournit quatre valeurs de pressions différentielles $dPE_{ij}$ qui sont appliquées au circuit de saturation et de seuil 46 qui sature les valeurs au-delà d'un certain niveau et qui ne retient que les valeurs dépassant un certain seuil. Le circuit logique de commande fournit aussi une consigne modifiée $C_{mm}$ de couple moteur.

Les valeurs de pressions différentielles $dPE_{ij}$ sont déterminées en fonction de la valeur du couple de lacet de manière à avoir pour effet de réduire la différence entre $\Phi'_{t,r}$ et $\Phi'_t$ mesurée par le comparateur 40. Le modèle de stratégie de semi-remorque 34 comprend un comparateur 50, un circuit de seuil 52, un circuit de calcul de dérivée 54, un circuit de détermination du signe de la dérivée 56, un circuit logique de commande 58 et un circuit de détermination de la commande 60.

Le comparateur 50 compare les valeurs $\Phi_{ts}$ et $\Phi_{ts,r}$ et fournit une valeur d'écart dont on ne tient compte que si elle dépasse un certain seuil défini par le circuit 52. Le circuit 54 calcule la dérivée de cette valeur d'écart pour permettre au circuit 56 de déterminer si cette valeur d'écart augmente ou diminue dans le temps. Le circuit logique de commande 58, qui reçoit, d'une part, la valeur d'écart ($\Phi_{ts} - \Phi_{ts,r}$) et, d'autre part, la valeur $\Phi'_t$, détermine si une action ou freinage sur la semi-remorque est utile.

Le circuit 60 calcule la pression de freinage $P_{rem}$ à appliquer sur l'essieu du semi-remorque par la formule :

$$P_{rem} = P_0[1+k.\,(m_{ch}/m_{ch,max})].$$

où $P_0$ est une pression prédéterminée, k est un gain et $m_{ch.max}$ est la valeur maximale de la masse du chargement.

La description qui vient d'être faite montre que les commandes sur les roues du tracteur sont déterminées principalement à partir de la vitesse de lacet du tracteur $\Phi'_t$ tandis que les commandes sur les roues de la semi-remorque sont déterminées principalement à partir de l'angle d'articulation $\Phi_{ts}$ entre la semi-remorque et le tracteur.

Le choix de ces deux variables $\Phi'_t$ et $\Phi_{ts}$ conduit à considérer quatre cas selon que l'on souhaite donner du sous-virage ou du sur-virage au tracteur (diminution ou augmentation de la valeur absolue $|\Phi'_t|$ et de la vitesse de lacet du tracteur et diminuer ou augmenter l'angle d'articulation du convoi (diminution ou augmentation de la valeur absolue $|\Phi_{ts}|$ de l'angle d'articulation.

Dans ces quatre cas, les roues du véhicule à actionner sont définies par le tableau ci-après.

| Ce qui est souhaité : | Donner du sous-virage au tracteur | Donner du sur-virage au tracteur |
| --- | --- | --- |
| Augmenter l'angle d'articulation | **(A)** Relâchement de la roue arrière intérieure et Freinage de la roue avant extérieure du tracteur et Relâchement des roues de la remorque | **(B)** Relâchement de la roue avant extérieure et Freinage de la roue arrière intérieure du tracteur et Relâchement des roues de la remorque |
| Diminuer l'angle d'articulation | **(C)** Relâchement de la roue arrière intérieure et Freinage de la roue avant extérieure du tracteur et Freinage des roues de la remorque | **(D)** Relâchement de la roue avant extérieure et Freinage de la roue arrière intérieure du tracteur et Freinage des roues de la remorque |

Dans tous les cas A, B, C et D, la stratégie de sélection des roues du tracteur à freiner ou à relâcher et qui est décrite dans le tableau ci-dessus peut avantageusement être améliorée de la façon suivante :

-  la roue se trouvant de même côté mais sur l'autre essieu du tracteur que la roue du tracteur sélectionnée dans le tableau, est actionnée également, avec une action de même nature (freinage ou relâchement) et une intensité égale ou proportionnelle à celle de la roue sélectionnée dans le tableau.

Cette amélioration augmente la contribution des forces longitudinales de freinage pour créer un couple de lacet permettant de donner du sous-virage ou du survirage au véhicule tracteur.

Les cas A et D posent un problème de conflit car l'action concernant l'angle d'articulation perturbe ou contredit l'action concernant la vitesse de lacet $\Phi'_t$ du tracteur relative au sous-virage ou sur-virage et vice-versa. Pour y remédier, il est nécessaire de choisir quelle action à privilégier, ce qui conduit à choisir l'action concernant la vitesse de lacet $\Phi'_t$, c'est-à-dire des actions sur le tracteur seulement, et à n'actionner les freins de la remorque qu'en cas de danger de mise au portefeuille ou de fouettement. A cet effet, les cas A et C d'une part et les cas B et D d'autre part ont été regroupés car les différences entre A et C ou B et D consistent uniquement dans les actions sur la remorque.

La stratégie décrite ci-dessus ne peut être mise en oeuvre que si l'angle d'articulation $\Phi_{ts}$ est connu, c'est-à-dire mesuré par un ou plusieurs capteurs sur le tracteur et la remorque.

Pour éviter la mise en place de tels capteurs, l'invention propose de détecter un départ en portefeuille ou un début de fouettement à partir de la mesure de la vitesse de lacet $\Phi'_t$ du tracteur et de la constatation expérimentale que le tracteur sur-vire dans les deux cas.

Pour le virage à gauche, le sur-virage est détecté si les trois conditions suivantes sont remplies simultanément :

$$\Phi'_t > S_0 \qquad (1)$$

$$(\Phi'_t - \Phi'_{t,r}) > S_1 \qquad (2)$$

$$d/dt(\Phi'_t - \Phi'_{t,r}) > S_2 \qquad (3)$$

et pour le virage à droite, le sur-virage est détecté si les trois conditions suivantes sont remplies simultanément.

$$\Phi'_t < -S_0 \qquad (1')$$

$$(\Phi'_t - \Phi'_{t,r}) < -S_1 \qquad (2')$$

$$d/dt\,(\Phi'_t - \Phi'_{t,r}) < -S_2 \qquad (3')$$

conditions dans lesquelles les valeurs $S_0$, $S_1$ et $S_2$ sont des seuils prédéfinis et ajustables.

si les conditions d'un groupe sont remplies, alors le freinage de la remorque est activée et la pression de freinage de la remorque est par exemple définie par :

$$P_{rem} = k \times m_{ch}\ (\left|\Phi'_t - \Phi'_{t,r}\right| + T\left|d/dt(\Phi'_t - \Phi'_{t,r})\right|)$$

avec k un gain et T une constante de temps.

Les conditions (1) et (1') signifient respectivement que le tracteur effectue un virage à gauche ou à droite. Les conditions (2) et (2') signifient que le tracteur survire significativement par rapport au modèle de référence qui a un comportement sain et normal. Les conditions (3) et (3') signifient respectivement que le sur-virage s'amplifie si $S_2$ est positif ou ne diminue pas assez vite si le seuil $S_2$ est négatif.

Il est prévu que la pression $P_{rem}$ aura une valeur minimale $P_{rem,min}$ afin d'éviter un freinage insignifiant.

Le freinage de la remorque provoque le réalignement de la remorque par rapport au tracteur et donc empêche la mise en portefeuille et le fouettement de la remorque.

Ce réalignement a aussi pour effet de diminuer le sur-virage du tracteur.

Pour éviter un renversement du véhicule, il faut d'abord détecter un lever de roue ou de condition proche du lever de roue de l'une des roues arrière du véhicule selon le virage à gauche ou à droite qui est effectué. A cet effet, l'invention propose, dans une première variante, de mesurer la différence des vitesses des roues arrières et si cette différence excède un certain seuil, par exemple 5 %, il est estimé que la roue arrière intérieure patine bien trop par rapport à la roue arrière extérieure et que cette différence est due à un report de charge latéral proche du lever de roue.

Dans une deuxième variante, l'invention propose de détecter le délestage plus ou moins important de la roue arrière intérieure en freinant périodiquement cette roue de manière légère et en mesurant la différence de glissement longitudinal entre les deux roues arrière. si la roue arrière intérieure est fortement délestée, alors la rotation de cette roue ralentira rapidement sous l'effet d'un léger freinage et éventuellement se bloquera de sorte qu'une nette différence de glissement longitudinal entre les deux roues arrière sera mesurée. Par contre, si la roue arrière intérieure est peu délestée, la rotation de la roue sera ralentie de manière insignifiante et la différence de glissement longitudinal sera faible. Le lever de roue sera déclaré comme imminent si cette différence de glissement longitudinal est supérieur à un certain seuil ou si la dérivée temporelle de cette différence de glissement est supérieure à un autre seuil.

Selon l'invention, cette détection du lever de roue par différence de vitesse ou de glissement longitudinal n'est réalisée que si l'accélération latérale est supérieure au seuil prédéfini $a_{ymax}$ corrigé éventuellement d'un facteur multiplicatif de sécurité compris par exemple entre 0,5 et 1.

En cas de détection du lever de roue imminent, l'invention propose de freiner globalement les roues du véhicule en freinant de manière plus significative les roues extérieures.

Dans le cas d'un véhicule articulé, le lever de roue commence par les roues arrières intérieures de la semi-remorque et se propage ensuite vers le tracteur. Lorsque la semi-remorque est équipée de capteurs de vitesse de roue et que les mesures des capteurs sont disponibles pour le système selon l'invention, le lever de roue peut être détecté comme pour le véhicule non articulé. En l'absence de tels capteurs de vitesse de roues de la semi-remorque, ou bien si les informations en provenance de ces capteurs ne sont pas disponibles auprès du système selon l'invention, alors l'invention propose d'utiliser ceux des roues arrière du tracteur pour détecter le lever de roue arrière de la semi-remorque.

En cas de détection d'un lever de roue de la remorque ou du tracteur, l'invention propose de freiner globalement les roues de l'ensemble du véhicule comme s'il s'agissait d'un véhicule non articulé.

Ce freinage du véhicule tracteur peut être réalisé de la façon suivante en appliquant les pressions suivantes :

$$P_{AV,\ \text{intérieure}} = k_1 \times P_0$$

$$P_{AV,\ \text{extérieure}} = k_2 \times P_0$$

$$P_{AR,\ \text{intérieure}} = k_3 \times P_0$$

$$P_{AR,\ \text{extérieure}} = k_4 \times P_0$$

$P_0$ étant une pression qui permet une décélération significative et $k_1$, $k_2$, $k_3$ et $k_4$ étant des coefficients de pondération dont la somme vaut 1 pour les roues disposées en diagonale.

Ces coefficients peuvent être adaptés en fonction du coefficient d'adhérence $\mu$ si ce dernier est estimé. Pour éviter la mise en portefeuille, le fouettement ou le renversement, l'invention propose de freiner les roues du véhicule mais ce freinage ne doit pas être affaibli par le couple moteur $C_m$. Aussi, l'invention propose de réduire le couple moteur, soit brutalement, soit progressivement selon une loi déterminée, dès que l'une ou plusieurs parmi toutes les pressions de freinage calculées par le système dépasse(nt) une certaine valeur prédéfinie.

La description qui vient d'être faite permet de définir un procédé de stabilisation d'un véhicule poids lourd, articulé ou non, par réduction du couple moteur et par freinage asymétrique dans un système de freinage global comprenant au moins un dispositif anti-blocage des roues, des capteurs pour mesurer la vitesse linéaire V du véhicule, l'angle de braquage $\delta$ des roues directrices, la vitesse de lacet $\Phi'_t$ du véhicule tracteur et un dispositif électro-pneumatique pour fournir des pressions de freinage à appliquer à chaque roue, caractérisé par les étapes suivantes consistant à :

(a) mesurer ou estimer l'accélération latérale $a_y$ subie par le véhicule, puis comparer cette accélération latérale à une valeur maximale $a_{ymax}$ que peut supporter le véhicule avant risque de renversement,

(b) détecter le lever de la (ou des) roue(s) arrière(s) intérieure(s) au virage lorsque l'accélération latérale dépasse la valeur maximale $a_{ymax}$, et

(c) réduire le couple moteur et freiner les roues du véhicule avec une intensité particulière à chaque roue de sorte que le véhicule réduit sa vitesse, ce qui diminue l'accélération latérale $a_y$.

L'étape (b) peut être réalisée de deux manières différentes, soit :

($b_1$) mesurer les vitesses des roues arrière,

($b_2$) calculer la différence des vitesses des roues arrière, et

($b_3$) indiquer le lever de roue arrière lorsque la différence des vitesses mesurées est supérieure à un certain seuil.

soit,

($b'_1$) appliquer un freinage très léger et périodique sur les roues arrières,

(b'$_2$) mesurer le glissement longitudinal de chaque roue arrière, et

(b'$_3$) calculer la différence des glissements longitudinaux des roues arrière ainsi que la dérivée temporelle de ces différences, et

(b'$_4$) indiquer le lever de roue arrière lorsque la différence des glissements longitudinaux ou la dérivée temporelle de cette différence sont supérieures à certains seuils prédéfinis.

Pour corriger la vitesse de lacet, le procédé est complété par les étapes suivantes :

(d) calculer la vitesse de lacet réelle $\Phi'_t$ du véhicule,

(e) calculer une vitesse de lacet de référence $\Phi'_{t,r}$ correspondant à un comportement normal de référence du véhicule,

(f) calculer une valeur d'écart entre la vitesse de lacet de référence et la vitesse de lacet mesurée ($\Phi'_{t,r} - \Phi'_t$), et

(g) calculer des pressions différentielles de freinage à appliquer aux roues d'un même essieu en fonction de la valeur d'écart ($\Phi'_{t,r} - \Phi'_t$) pour créer un couple de lacet tendant à diminuer la valeur d'écart ($\Phi'_{t,r} - \Phi'_t$).

Pour éliminer les pressions trop faibles ou trop fortes, le procédé comprend les étapes supplémentaires suivantes :

(h) comparer les pressions différentielles de freinage calculées par l'étape (g) à un premier seuil et à ne tenir compte que des pressions différentielles qui sont supérieures à ce premier seuil, et

(i) comparer les pressions différentielles de freinage retenues par l'étape (h) à un deuxième seuil et contraindre les pressions différentielles à rester inférieures à ce deuxième seuil.

L'étape (g) comprend les étapes suivantes :

(g$_1$) calculer une force différentielle longitudinale à appliquer aux roues de chaque essieu en fonction de la valeur d'écart ($\Phi'_{t,r} - \Phi'_t$) pour créer un couple de lacet tendant à diminuer ladite valeur d'écart.

(g$_2$) traduire cette force différentielle longitudinale en pressions différentielles de freinage à appliquer aux roues d'un même essieu, et

(g$_3$) combiner ces pressions différentielles de freinage résultant de l'étape (g$_2$) avec les pressions différentielles définies par le dispositif anti-blocage en fonction du freinage du conducteur.

Dans le cas d'un véhicule articulé, la mise en portefeuille ou le fouettement sont évités par les étapes supplémentaires suivantes :

(j) mesurer l'angle d'articulation $\Phi_{ts}$ entre le tracteur et la remorque,

(k) calculer un angle d'articulation de référence $\Phi_{ts,r}$ au-delà duquel il y a risque de mise en portefeuille ou de fouettement,

(l) calculer la valeur d'écart ($\Phi_{t,s} - \Phi_{ts,r}$),

(m) comparer cette valeur d'écart ($\Phi_{ts} - \Phi_{ts,r}$) à un seuil pour fournir une indication lorsqu'elle est supérieure audit seuil,

(n) calculer la dérivée par rapport au temps de cette valeur d'écart ($\Phi_{ts} - \Phi_{ts,r}$) pour déterminer par son signe si la valeur de l'écart augmente, et

(o) freiner les roues de la remorque si les conditions des étapes (m) et (n) sont remplies, ce qui indique un début de mise en portefeuille ou de fouettement. Cette action de freinage a pour effet de réaligner la remorque par rapport au véhicule tracteur.

Dans le cas où l'angle d'articulation n'est pas connu, le procédé de l'invention prévoit de remplacer les étapes (j) à (o) par les étapes suivantes :

(j') détecter un sur-virage significatif du tracteur dont l'amplitude ne diminue pas assez vite ou augmente, et

(k') freiner les roues de la remorque si les conditions de l'étape (j') sont remplies.

De manière plus précise, l'étape (j') comprend les étapes suivantes :

(j'$_1$) déterminer si la vitesse de lacet réelle $\Phi'_t$ calculée par l'étape (d) est supérieure à un premier seuil $S_0$ ou inférieure à -$S_0$ selon le sens du virage,

(j'$_2$) déterminer si la valeur d'écart des vitesses de lacet entre les vitesses de lacet de référence et réelle ($\Phi'_t - \Phi'_{t,r}$)

calculée par l'étape (f) est supérieure à un deuxième seuil $S_1$ ou inférieure à $-S_1$ selon le sens du virage,

($j'_3$) déterminer si la variation par rapport au temps de la valeur d'erreur ($\Phi'_t - \Phi'_{t,r}$) est supérieure à un troisième seuil $S_2$ ou inférieure à $-S_2$ selon le sens du virage,

($j'_4$) indiquer l'apparition d'un sur-virage du tracteur ainsi que l'augmentation ou la diminution trop lente de ce sur-virage, si les conditions des étapes ($j'_1$), ($j'_2$) et ($j'_3$) sont remplies.

**Revendications**

1. Procédé de stabilisation d'un véhicule poids lourd, articulé ou non, par freinage asymétrique dans un système de freinage global comprenant au moins un dispositif anti-blocage des roues, des capteurs pour mesurer la vitesse linéaire longitudinale (V) du véhicule, l'angle de braquage ($\delta$) du volant, la vitesse de lacet ($\Phi'_t$) du véhicule et un dispositif de freinage pour fournir des forces de freinage à appliquer à chaque roue, caractérisé par les étapes suivantes consistant à :

   (a) mesurer ou estimer l'accélération latérale ($a_y$) subie par le véhicule, puis comparer cette accélération latérale à une valeur maximale ($a_{ymax}$) que peut supporter le véhicule avant risque de renversement,
   (b) détecter le lever de la (ou des) roue(s) arrière(s) intérieure(s) au virage lorsque l'accélération latérale dépasse la valeur maximale ($a_{ymax}$), et
   (c) réduire le couple moteur et freiner les roues du véhicule avec une intensité particulière à chaque roue de sorte que le véhicule réduit sa vitesse, ce qui diminue l'accélération latérale.

2. Procédé de stabilisation selon la revendication 1, caractérisé en ce que l'étape (b) consiste à :

   ($b_1$) mesurer les vitesses des roues arrières,
   ($b_2$) calculer la différence des vitesses des roues arrière, et
   ($b_3$) indiquer le lever de roue arrière lorsque la différence des vitesses mesurées est supérieure à un certain seuil.

3. Procédé de stabilisation selon la revendication 1, caractérisé en ce que l'étape (b) consiste à :

   ($b'_1$) appliquer un freinage très léger et périodique sur les roues arrières,
   ($b'_2$) mesurer le glissement longitudinal de chaque roue arrière, et
   ($b'_3$) calculer la différence des glissements longitudinaux des roues arrières ainsi que la dérivée temporelle de ces différences, et
   ($b'_4$) indiquer le lever de roue arrière lorsque la différence des glissements longitudinaux ou la dérivée temporelle de cette différence sont supérieures à un certain seuil.

4. Procédé de stabilisation selon l'une des revendications précédentes 1 à 3, caractérisé en ce qu'il comprend, en outre, les étapes supplémentaires suivantes consistant à :

   (d) calculer la vitesse de lacet réelle ($\Phi'_t$) du véhicule,
   (e) calculer une vitesse de lacet de référence ($\Phi'_{t,r}$) correspondant à un comportement normal de référence du véhicule,
   (f) calculer une valeur d'écart entre la vitesse de lacet de référence et la vitesse de lacet réelle mesurée ($\Phi'_{t,r} - \Phi'_t$), et
   (g) calculer des pressions différentielles de freinage à appliquer aux roues d'un même essieu en fonction de la valeur d'écart ($\Phi'_{t,r} - \Phi'_t$) pour créer un couple de lacet tendant à diminuer la valeur d'écart ($\Phi'_{t,r} - \Phi'_t$).

5. Procédé selon la revendication 4, caractérisé en ce qu'il comprend, en outre, les étapes supplémentaires suivantes consistant à :

   (h) comparer les pressions différentielles de freinage calculées par l'étape (g) à un premier seuil et à ne tenir compte que des pressions différentielles qui sont supérieures à ce premier seuil, et
   (i) comparer les pressions différentielles de freinage retenues par l'étape (h) à un deuxième seuil et contraindre les pressions différentielles à rester inférieures à ce deuxième seuil.

6. Procédé selon la revendication 4 ou 5, caractérisé en ce que l'étape (g) consiste à :

(g$_1$) calculer une force différentielle longitudinale à appliquer aux roues de chaque essieu en fonction de la valeur d'écart ($\Phi'_{t,r} - \Phi'_t$) pour créer un couple de lacet tendant à diminuer ladite valeur d'écart.

(g$_2$) traduire cette force différentielle longitudinale en pressions différentielles de freinage à appliquer aux roues d'un même essieu, et

(g$_3$) combiner ces pressions différentielles de freinage résultant de l'étape (g$_2$) avec les pressions différentielles définies par le dispositif anti-blocage en fonction du freinage du conducteur.

7. Procédé selon l'une des revendications 5 ou 6, pour être mis en oeuvre dans un véhicule articulé du type tracteur/remorque, caractérisé en ce qu'il comprend, en outre, les étapes suivantes consistant à :

(j) mesurer l'angle d'articulation ($\Phi_{ts}$) entre le tracteur et la remorque,

(k) calculer un angle d'articulation de référence ($\Phi_{ts,r}$) au-delà duquel il y a risque de mise en portefeuille ou de fouettement,

(l) calculer la valeur d'écart ($\Phi_{t,s} - \Phi_{ts,r}$),

(m) comparer cette valeur d'écart ($\Phi_{ts} - \Phi_{ts,r}$) à un seuil pour fournir une indication lorsqu'elle est supérieure audit seuil,

(n) calculer la dérivée par rapport au temps de cette valeur d'écart ($\Phi_{ts} - \Phi_{ts,r}$) pour déterminer par son signe si la valeur de l'erreur augmente, et

(o) freiner les roues de la remorque si les conditions des étapes (m) et (n) sont remplies, ce qui indique un début de mise en portefeuille ou de fouettement, ce qui a pour effet de réaligner la remorque par rapport au véhicule tracteur.

8. Procédé selon la revendication 7, caractérisé en ce que l'étape (o) consiste à freiner identiquement les roues de chaque essieu de la remorque.

9. Procédé selon la revendication 6 ou 7, caractérisé en ce que l'étape (o) consiste à appliquer une pression de freinage proportionnelle au rapport $m_{ch}/m_{ch,max}$ entre la charge réelle du chargement et la charge maximale.

10. Procédé selon la revendication 5 ou 6 pour être mis en oeuvre dans un véhicule articulé du - type tracteur/remorque, caractérisé en ce qu'il comprend, en outre, les étapes suivantes consistant à :

(j') détecter un sur-virage significatif du tracteur dont l'amplitude ne diminue pas assez vite ou augmente, et

(k') freiner les roues de la remorque si les conditions de l'étape (j') sont remplies.

11. Procédé selon la revendication 10, caractérisé en ce que l'étape (j') consiste à :

(j'$_1$) déterminer si la vitesse de lacet réelle ($\Phi'_t$) calculée par l'étape (d) est supérieure à un premier seuil S$_0$ ou inférieure à -S$_0$ selon le sens du sur-virage,

(j'$_2$) déterminer si la valeur d'écart des vitesses de lacet entre les vitesses de lacet de référence et réelle ($\Phi'_t - \Phi'_{(t,r)}$) calculée par l'étape (f) est supérieure à un deuxième seuil S$_1$ ou inférieure à -S$_1$ selon le sens du virage,

(j'$_3$) déterminer si la variation par rapport au temps de la valeur d'écart ($\Phi'_t - \Phi'_{t,r}$) est supérieure à un troisième seuil S$_2$ ou inférieure à -S$_2$ selon le sens du virage,

(j'$_4$) indiquer l'apparition d'un sur-virage du tracteur ainsi que l'augmentation ou la diminution trop lente de ce sur-virage si les conditions des étapes (j'$_1$), (j'$_2$) et (j'$_3$) sont remplies.

12. Procédé selon la revendication 10 ou 11, caractérisé en ce que la pression de freinage qui est appliquée sur les roues de la remorque est proportionnelle à la masse du chargement, à la valeur d'écart ($\Phi'_t - \Phi'_{t,r}$) et à la variation par rapport au temps de cette valeur d'écart.

13. Procédé selon l'une quelconque des revendications précédentes 1 à 12, caractérisé en ce qu'il comprend, en outre, l'étape suivante consistant à :

(p) réduire le couple moteur ($C_m$) du véhicule dès que l'une ou plusieurs parmi toutes les pressions de freinage calculées par le système dépasse(nt) une certaine valeur prédéfinie.

14. Système de stabilisation d'un véhicule poids lourd, articulé ou non, par freinage asymétrique dans un système de freinage global comprenant au moins :

- un dispositif anti-blocage des roues,
- des capteurs pour mesurer la vitesse linéaire (V) du véhicule, l'angle de braquage $\delta$ du volant, la vitesse de lacet $\Phi'_t$ du tracteur,
- un dispositif de freinage à commande électrique ou électronique pour fournir des valeurs calculées de force de freinage à appliquer sur chaque roue de chaque essieu,

caractérisé en ce qu'il comprend :

- des premiers moyens (30) pour calculer, à l'aide d'un modèle mathématique de référence, une valeur de référence de vitesse de lacet ($\Phi'_{t,r}$) correspondant à un comportement normal du véhicule, et
- des deuxièmes moyens (32, 40, 42, 44, 46) pour calculer des pressions différentielles de freinage à appliquer aux roues de chaque essieu en fonction de la valeur d'écart ($\Phi'_{t,r} - \Phi'_t$) entre la valeur de référence ($\Phi'_{t,r}$) et la mesure de la vitesse de lacet ($\Phi'_t$), lesdites pressions différentielles étant appliquées au dispositif anti-blocage (20).

15. Système selon la revendication 14, caractérisé en ce que :

- les premiers moyens (30) sont prévus pour calculer en outre une valeur de référence d'angle d'articulation ($\Phi_{ts,r}$) correspondant à un comportement normal du véhicule, le système comportant, en outre :
- des troisièmes moyens (34, 50, 52, 54, 56, 58, 60) pour calculer les valeurs du freinage des roues de la remorque lorsque la valeur d'écart ($\Phi_{ts,r} - \Phi_{ts}$) entre la valeur de référence de l'angle d'articulation ($\Phi_{ts,r}$) et la valeur mesurée de l'angle d'articulation ($\Phi_{ts}$), les valeurs de freinage étant appliquées au dispositif anti-blocage (20).

# FIG.1a

# FIG.1b

# FIG.2

$\Phi'_t , PE_{ij} , C_m$

$V , \delta , ay_{max}$

$\Phi'_t , \Phi'_{ts} , m_{ch}$

Détermination des actions sur tracteur

Modéle de référence

Détermination des actions sur remorques

$C_{mm}$

$\Phi'_{t,r}$   $PE_{ij}$   $\Phi_{ts,r}$

$dPE_{ij}$

$PF_{ij}$

# FIG.3

$\Phi'_t$    40    $\Phi'_{t,r}$

$-$   $+$

48

42    **FIG.4**

P I D

44

Circuit
logique
de commande

$\left\{ \begin{array}{l} \Phi'_t , PE_{ij} \\ \\ C_m \end{array} \right.$    Répartition de la
commande aux
roues de l'essieu

Saturation et seuil
sur les signaux
de commande

46

$C_{mm}$

$\Phi_{ts}$    $\Phi_{ts,r}$

50      54

$-$   $+$     d/dt    Dérivée de
l'erreur de l'angle
d'articulation

56

52        Détermination
des entrées de
la logique

seuil      signe

Circuit
logique de
commande

$\Phi'_t$    Détermination
si un freinage
sur la remorque
est utile

58

**FIG.5**

$\underline{0}$ ou $\underline{1}$

60   Détermination
de la
commande

$m_{ch}$   Calcul de
la force
de freinage

14

EP 0 919 445 A1

## DOCUMENTS CONSIDERES COMME PERTINENTS

Numéro de la demande

EP 98 40 2886

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 321 894 A (FUJI HEAVY IND LTD) 28 juin 1989 <br> * le document en entier * <br> --- | 1-3,14 | B60T8/00 |
| A | US 5 380 072 A (BREEN MICHAEL T) 10 janvier 1995 <br> * le document en entier * <br> --- | 1,2,14 | |
| A | DE 196 02 879 C (KNORR BREMSE SYSTEME) 7 août 1997 <br> * le document en entier * <br> --- | 1,2,4, 10,14 | |
| A | FR 2 695 613 A (RENAULT) 18 mars 1994 <br><br> * le document en entier * <br> ----- | 1,2,4-6, 14 | |

**DOMAINES TECHNIQUES RECHERCHES (Int.Cl.6)**

B60T

Le présent rapport a été établi pour toutes les revendications

| Lieu de la recherche | Date d'achèvement de la recherche | Examinateur |
|---|---|---|
| LA HAYE | 26 février 1999 | Geyer, J-L |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    & : membre de la même famille, document correspondant

EPO FORM 1503 03.82 (P04C02)

15

ANNEXE AU RAPPORT DE RECHERCHE EUROPEENNE
RELATIF A LA DEMANDE DE BREVET EUROPEEN NO.

EP 98 40 2886

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

26-02-1999

| Document brevet cité au rapport de recherche | | Date de publication | Membre(s) de la famille de brevet(s) | | Date de publication |
|---|---|---|---|---|---|
| EP 0321894 | A | 28-06-1989 | JP | 1168555 A | 04-07-1989 |
| | | | JP | 2618250 B | 11-06-1997 |
| | | | DE | 3870596 A | 04-06-1992 |
| | | | US | 4976330 A | 11-12-1990 |
| US 5380072 | A | 10-01-1995 | AUCUN | | |
| DE 19602879 | C | 07-08-1997 | WO | 9728017 A | 07-08-1997 |
| | | | EP | 0871578 A | 21-10-1998 |
| FR 2695613 | A | 18-03-1994 | AUCUN | | |

EPO FORM P0460